**Europäisches Patentamt**

**European Patent Office**

**Office européen des brevets**

(19)

(11) **EP 1 317 096 A2**

(12) **EUROPÄISCHE PATENTANMELDUNG**

(43) Veröffentlichungstag:
**04.06.2003 Patentblatt 2003/23**

(51) Int Cl.[7]: **H04L 9/08**, H04L 9/30,
H04L 9/32

(21) Anmeldenummer: **02026598.9**

(22) Anmeldetag: **28.11.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **29.11.2001 DE 10159690**

(71) Anmelder: **Stickel, Eberhardt, Prof. Dr.
70376 Stuttgart (DE)**

(72) Erfinder: **Stickel, Eberhardt, Prof. Dr.
70376 Stuttgart (DE)**

(74) Vertreter: **Lucht, Silvia et al
Geitz Truckenmüller Lucht
Werderring 15
79098 Freiburg (DE)**

(54) **Verfahren zur Bestimmung eines symmetrischen Schlüssels über einen unsicheren Kanal und zur digitalen Signatur bei der Übermittlung einer Nachricht zwischen einer ersten und einer zweiten Vorrichtung**

(57) Es wird ein Verfahren zur Bestimmung eines symmetrischen Schlüssels über einen unsicheren Kanal und zur digitalen Signatur bei der Übermittlung einer Nachricht zwischen einer ersten und einer zweiten Vorrichtung vorgeschlagen, bei dem die Produkte von Potenzen nicht kommutierender Matrizen gebildet werden.

Fig. 2

**Beschreibung**

Stand der Technik

Verfahren zur Bestimmung eines symmetrischen Schlüssels über einen unsicheren Kanal und zur digitalen Signatur bei der Übermittlung einer Nachricht zwischen einer ersten und einer zweiten Vorrichtung nach dem Oberbegriff des Anspruchs 1.

Die fortschreitende Vernetzung von Informationssystemen sowie die fortschreitende Integration von neuen Technologien etwa im Bereich Mobilkommunikation ermöglichen den schnellen Versand und Empfang von Datenpaketen. Dabei handelt es sich oftmals um Daten, die nicht von Dritten eingesehen beziehungsweise verändert werden sollen. Darüber hinaus ist es oftmals notwendig, die Identität des Senders bestimmen oder nachprüfen zu können. Letzteres ist insbesondere bei Electronic oder Mobile Commerce Anwendungen notwendig, bei denen mit einer Transaktion immer ein Bezahlvorgang verbunden ist.

Die Kryptologie beschäftigt sich wissenschaftlich mit den eben skizzierten Bereichen. Sie stellt Verfahren zur Sicherung von Vertraulichkeit, Integrität, Authentizität und Verbindlichkeit von Nachrichten beziehungsweise Sendern und Empfängern bereit. Um die Vertraulichkeit von Nachrichten zu gewährleisten, bedient man sich sogenannter Verschlüsselungsverfahren. Um zu garantieren, dass die empfangene Nachricht nicht auf dem Übertragungswege verfälscht oder manipuliert wird, verwendet man oft einen Hash-Wert, also eine komprimierte Zusammenfassung der übermittelten Daten. Dieser wird gemeinsam mit der Nachricht an den Empfänger gesandt. Authentizität und Verbindlichkeit von Nachrichten werden auf der Basis digitaler Signaturen erreicht.

Die Verfahren zur Verschlüsselung von Nachrichten können in die Kategorien symmetrische und asymmetrische oder Public-Key-Verfahren klassifiziert werden. Symmetrische Verfahren erfordern die ex ante Vereinbarung eines gemeinsamen Schlüssels zwischen Sender und Empfänger. Häufig eingesetzt werden in diesem Bereich DES oder IDEA. Symmetrische Verfahren erlauben im allgemeinen eine effiziente Ver- und Entschlüsselung. Allerdings ist die erforderliche ex ante Vereinbarung von Schlüsseln zeitaufwendig, wenn man nicht andere Verfahren vorschaltet. Zur Vorschaltung eignen sich Public-Key-Verfahren. Hier verfügen Sender und Empfänger jeweils über ein Schlüsselpaar, bestehend aus einem öffentlichen Schlüssel, der allgemein bekannt ist, und einem privaten Schlüssel, der von der jeweiligen Partei geheimgehalten wird. Eine Nachricht wird nun vom Sender mit dem öffentlichen Schlüssel des Empfängers verschlüsselt. Der Empfänger kann dann die erhaltene verschlüsselte Nachricht mit seinem privaten Schlüssel entschlüsseln. Formal sind folglich öffentlicher und privater Schlüssel invers zueinander. Public-Key-Verfahren sind für die Verschlüsselung von Daten weniger effizient als symmetrische Verfahren, da die zugrunde liegenden Verfahren aufwendiger sind. Allerdings ist jetzt die bilaterale ex ante Vereinbarung eines Schlüssels nicht mehr notwendig. Nun wird klar, dass man Public-Key-Verfahren gut für die Vereinbarung eines symmetrischen Schlüssels über einen unsicheren Übertragungskanal nutzen kann. Dazu legt beispielsweise der Sender einer Nachricht den symmetrischen Schlüssel fest und übermittelt diesen mit dem öffentlichen Schlüssel des Empfängers kodiert an diesen. Dieser entschlüsselt mit seinem privaten Schlüssel. Jetzt sind sowohl Sender als auch Empfänger im Besitz des symmetrischen Schlüssels. Größere Datenmengen können jetzt effizient mit diesem symmetrischen Schlüssel verschlüsselt und übertragen werden. Oftmals werden neue symmetrische Schlüssel zu Beginn einer jeden neuen Sitzung vereinbart. Man spricht dann von sogenannten Sitzungsschlüsseln.

Das bekannteste und am häufigsten eingesetzte Public-Key-Verfahren ist das RSA-Verfahren. Es beruht auf der Schwierigkeit, große Zahlen in Primfaktoren zu zerlegen. Speziell zum Austausch von Schlüsseln über einen unsicheren Übertragungskanal gibt es weitere Verfahren. Diese sind in Aufbau und Struktur sehr ähnlich zum erstmalig von Diffie und Hellmann publizierten Schlüsselaustauschverfahren. Dieses Verfahren nutzt die Schwierigkeiten bei der Berechnung diskreter Logarithmen in endlichen Körpern aus (vgl. Menezes, A., van Oorschot, P., Vanstone, S.: Handbook of Applied Cryptography. CRC Press, Boca Raton (1998)). Da jedem Körper seine multiplikative Abelsche Gruppe zugeordnet werden kann, spricht man synonym von Implementierungen in Körpern beziehungsweise Abelschen Gruppen. Die in der Literatur diskutierten Verfahren wurden in zahlreichen Körpern implementiert. Auf dem heutigen Stand der Technik bieten Implementierungen über elliptischen Kurven den besten Schutz. Implementierungen in Körpern der Charakteristik 2 - dies liegt insbesondere vor dem Hintergrund einer effizienten technischen Umsetzung nahe - bieten wesentlich weniger Sicherheit bei gleicher Schlüssellänge, als Verfahren, die in Körpern implementiert wurden, deren Charakteristik eine von zwei verschiedene Primzahl ist (vgl. Coppersmith, D.: Fast Evaluation of Logarithms in Fields of Characteristic Two. IEEE Transactions on Information Theory, Vol. IT-30, No. 4 (July 1984), S. 587-594). Festzuhalten ist, dass in den vergangenen Jahren immer effizientere Verfahren zur Berechnung diskreter Logarithmen und zur Faktorisierung großer Zahlen publiziert worden sind. Dies bedeutet, dass immer größere Schlüssellängen zum Schutz vor kryptoanalytischen Angriffen notwendig sind.

Digitale Signaturen können auf der Basis von Public-Key-Verfahren implementiert werden. Zur Signatur einer Nachricht verschlüsselt der Sender diese beziehungsweise einen Hashwert mit dem nur ihm bekannten privaten Schlüssel. Der Empfänger der Nachricht kann diese mit dem öffentlichen Schlüssel des Senders entschlüsseln und so die Identität prüfen. Selbstverständlich kann man digitale Signatur und Nachrichtenverschlüsselung kombinieren. Dazu wird die Nachricht und die Signatur noch zusätzlich mit dem öffentlichen Schlüssel des Empfängers kodiert. Insofern gelten die oben gemachten Bemerkungen über die Effizienz und Sicherheit der heute bekannten Verfahren auch für den Bereich digitaler Signaturen.

Das im Rahmen der Erfindung entwickelte Verfahren zur digitalen Signatur gehört zum Bereich der einmaligen Signaturverfahren (One-Time-Signatures). Diese können bei festen Parametern zur einmaligen Signatur benutzt werden. Für weitere Signaturen sind entsprechend veränderte Parameter zu benutzen. Üblicherweise garantiert ein Trusted Server die jeweils verwendeten Parameter (vgl. dazu Menezes, A., van Oorschot, P., Vanstone, S.: Handbook of Applied Cryptography. CRC Press, Boca Raton (1996), S. 462 ff.).

Die Erfindung und ihre Vorteile

Gegenüber den bekannten Verfahren hat das erfindungsgemäße Verfahren mit den kennzeichnenden Merkmalen des Anspruchs 1 den Vorteil, dass die Sicherheit des Verfahrens weder auf der Schwierigkeit der Faktorisierung großer Zahlen noch auf der Schwierigkeit der Berechnung diskreter Logarithmen beruht. Das Verfahren wird in einer nicht kommutativen Gruppe implementiert. Gebildet werden Produkte von Potenzen von Gruppenelementen. Insofern kann keines der Verfahren zur Berechnung diskreter Logarithmen herangezogen werden, da hier immer die Kommutativität vorausgesetzt werden muß. Die Struktur nicht kommutativer Gruppen ist wesentlich komplexer als die Struktur Abelscher Gruppen (vgl. Rotman, J.: An Introduchtion to the Theory of Groups. 4th Ed., Springer-Verlag, New York (1994), Kapitel 4 ff.).

Die Umsetzung erfolgt in der Gruppe der invertierbaren $n \times n$ Matrizen über dem Körper $\mathbf{F_2}$. Dieser Körper besteht aus zwei Elementen, nämlich 0 und 1. Die Regeln für Addition und Multiplikation sind gegeben durch 0+0 = 1+1 = 0, 1+0 = 0+1 = 1, 0*0 = 1*0 = 0*1 = 0 und 1*1=1. Insofern ist die Addition und Multiplikation von Matrixkomponenten sehr effizient umsetzbar.

Der Einsatz der Erfindung kann aufgrund der effizienten Implementierungsmöglichkeiten und wegen des geringen erforderlichen Speicher- und Kommunikationsaufwandes nicht nur im Rahmen von Client-Server-Applikationen beziehungsweise der Host-Host-Kommunikation erfolgen, sondern auch in den Bereichen Mobilkommunikation und Smartcard-Applikationen.

Als symmetrische Schlüssel und als digitale Signatur dienen n x n-Matrizen. Ausgegangen wird von zwei irreduziblen Polynomen vom Grad n. Zu diesen Polynomen werden die Companion-Matrizen gebildet. Die beiden an dem Verfahren beteiligten Vorrichtungen A und B bestimmen anhand eines randomisierten Algorithmus die privaten Schlüssel als natürliche Zahlen. Als Vorrichtungen kommen insbesondere Rechner zum Einsatz.

Der Grad $n$ der Polynome ist eine Primzahl und so gewählt, dass die Zahl $p = 2^n$-1 ebenfalls eine Primzahl darstellt. Derartige Zahlen $p$ heißen Mersenne-Primzahlen, $n$ wird als Mersenne-Exponent bezeichnet. So generieren beispielsweise zwei an einer Kommunikation beteiligten Vorrichtungen A und B jeweils ein irreduzibles Polynom vom Grade $n$. Dieses Polynom ist öffentlich bekannt und entspricht folglich dem öffentlichen Schlüssel bekannter Public-Key-Verfahren. Jedem Polynom kann direkt eine sogenannte Companion-Matrix zugeordnet werden. Seien $C$ und $D$ diese Companion-Matrizen. Im einfachsten Fall generieren nun die Vorrichtungen A und B anhand eines randomisierten Algorithmus zufällig jeweils zwei Paare natürlicher Zahlen $(a,b)$ beziehungsweise $(c,d)$. A bildet $D^a C^b$ und sendet das Ergebnis an B. Die Vorrichtung B bildet $D^c C^d$ und sendet das Ergebnis an A. A kann aus der empfangenen Matrix den symmetrischen Schlüssel $D^{a+c} C^{b+d}$ bilden. B verfährt analog. $C$ und $D$ kommutieren genau dann nicht, wenn sie zu verschiedenen irreduziblen Polynomen gehören. Somit ist klar, dass man sich in nicht kommutativen Gruppen bewegt. Insbesondere ist die Entschlüsselungsproblematik vollkommen verschieden vom Problem der Berechnung diskreter Logarithmen. Es wird bei der detaillierten Besprechung des Verfahrens ausgeführt, dass es bei Verwendung einer Mersenne-Primzahl $n$ insgesamt $(2^n$-1$)^2$ verschiedene Produkte $D^a C^b$ gibt. Insofern bieten bereits kleine $n$ (etwa $n = 61$ oder $n = 89$) ausgezeichneten Schutz gegen kryptoanalytische Angriffe, die nach heutigem Kenntnisstand die Berechnung aller möglichen Produkte erfordern.

Die Berechnung der obigen Matrixpotenzen kann sehr effizient und schnell erfolgen. Da das Verfahren bereits bei kleinen $n$ eine ausgezeichnete Sicherheit bietet, ist der Kommunikationsaufwand, der durch den Austausch der berechneten Matrizen erforderlich wird, gering. Gleiches gilt für den notwendigen Speicheraufwand, so dass sich das Verfahren auch gut für Smartcard-Applikationen eignet.

Digitale Signaturen und Authentikationsverfahren lassen sich in ähnlicher Weise implementieren. Im folgenden wird das Verfahren detailliert diskutiert.

Dabei werden vier Varianten erörtert. Die ersten beiden Varianten beziehen sich auf die Verschlüsselung von Daten. Die dritte Variante liefert eine Lösung des Identifikationsproblems, während die vierte Variante eine digitale Signatur mit entsprechender Übermittlung eines Hash-Wertes präsentiert. Anschließend wird auf die Anwendung der Erfindung im Rahmen von Zertifizierungen und Schlüsselmanagementprotokollen eingegangen.

Im folgenden wird das Verfahren im Detail beschrieben:

$p(x)$ und $q(x)$ seien unterschiedliche irreduzible Polynome vom Grad $n$ über dem Körper $\mathbf{F_2}$. Den Polynomen $p$ bzw. $q$ werden die Companion-Matrizen $C$

und *D* zugeordnet. Ist folglich etwa

$$p(x) = x^n + \sum_{i=0}^{n-1} c_i x^i \; ,$$

so wird mit diesem Polynom die Companion-Matrix

$$C = \begin{pmatrix} 0 & 0 & \cdots & \cdots & c_0 \\ 1 & 0 & 0 & \ddots & c_1 \\ 0 & 1 & \ddots & \ddots & \vdots \\ \vdots & \ddots & \ddots & 0 & c_{n-2} \\ 0 & 0 & \cdots & 1 & c_{n-1} \end{pmatrix}$$

assoziiert. Für *q* verfährt man analog und erhält die Companion-Matrix *D.*

Der Grad *n* der Polynome sei ein Mersenne-Exponent. Dann ist auch $2^n$-1 eine Primzahl. Zahlreiche Mersenne-Exponenten sind bekannt, etwa *n* = 3, 7, 13, 17, 19, 31, 61, 89, 107, 127, 521, 607, 1279, ...

Sind *p* und *q* verschieden, so gilt dies auch für *C* und *D.* Insbesondere ist *CD* ≠ *DC* genau dann, wenn *C* ≠ *D* gilt. Deshalb ist die von *C* und *D* erzeugte Untergruppe *<C,D>* der Gruppe *GL(n)* aller *n*×*n* Matrizen mit Komponenten aus $\mathbf{F_2}$ nicht kommutativ.

Aufgrund der Wahl von *n* besitzen nun sowohl *C* als auch *D* die Ordnung $2^n$-1. Dies bedeutet, dass $C^{2^n-1} = D^{2^n-1} = I$ gilt. Dabei ist *I* die Einheitsmatrix und es gibt keinen kleineren Exponenten e für den $C^e = I$ beziehungsweise $D^e = I$ gilt. Die Ordnung der Matrizen kann man auch als Periode der mit den Matrizen jeweils verbundenen Schieberegisterfolgen interpretieren (vgl. Lidl, R., Niederreiter, H.: Finite Fields. Reprint 2nd Ed. Cambridge University Press, Cambridge (2000), Kapitel 8). Die Menge $\{D^a C^b / a,b \in N\}$ hat insgesamt $(2^n-1)^2$ verschiedene Elemente.

Die Erfindung beruht auf dem Vorhandensein irreduzibler Polynome vom Grade *n* über dem Körper $F_2$. Für hinreichend großes *n* sind auch hinreichend viele irreduzible Polynome vorhanden, so dass dies keine Restriktion darstellt. Die Zahl irreduzibler Polynome vom Grade *n* ist nämlich gegeben durch

$$N(n) = \frac{2}{n}(2^{n-1} - 1).$$

Ein gegebenes Polynom *p* ist genau dann irreduzibel, wenn

$$\mathrm{ggT}\!\left(p(x), x^{2^i} - x\right) = 1$$

für alle natürlichen *i* mit 1 ≤ *i* ≤ *n*/2 gilt. Dabei bezeichnet *ggT(p,q)* den größten gemeinsamen Teiler der Polynome *p, q*. Der größte gemeinsame Teiler von Polynomen kann sehr effizient mit dem Euklidischen Algorithmus berechnet werden (vgl. Krishnamurthy, E.: Error-Free Polynomial Matrix Computations. Springer-Verlag, New York (1984)).

Zur Generierung irreduzibler Polynome kann man ein randomisiertes Verfahren verwenden. Man generiert zufällig Koeffizienten eines Polynoms vom Grade *n* und testet das so erhaltene Polynom auf Irreduzibilität. Falls das Polynom reduzibel ist, generiert man erneut zufällig einen weiteren Testkandidaten, bis man schließlich ein irreduzibles Polynom erhält.

Beachtet man, dass es insgesamt $2^n$ Polynome vom Grad *n* gibt, so ist die Wahrscheinlichkeit, dass ein beliebiges Polynom vom Grad *n* irreduzibel ist, annähernd 1/*n*. Genauer gilt die Beziehung

$$\frac{1}{2n} \le \frac{N(n)}{2^n} \approx \frac{1}{n}.$$

Damit kann die Wahrscheinlichkeit für das Generieren eines irreduziblen Polynoms nach einer Zahl von Versuchsdurchläufen ermittelt werden. Zu beachten ist, das man irreduzible Polynome nur einmalig als öffentliche Schlüssel benötigt.

Die Potenzen von Companion-Matrizen können effizient berechnet werden. Insbesondere kann auf Matrixmultiplikationen verzichtet werden.

Gegeben sei die Companion-Matrix *C* mit charakteristischen Polynom *c(x)*. *c* sei irreduzibel. Folgende Sachverhalte gelten (vgl. Fiduccia, C. M.: An Efficient Formula for Linear Recurrences. SIAM J. Computation, Vol. 14, Nr. 1 (1985), S. 106-112).

(1) Die Berechnung von $r(x) = x^e$ mod *c(x)* ist in O($\mu$ (*n*)log e) Operationen möglich. Dabei bezeichnet $\mu$ (*n*) den Aufwand zur Multiplikation zweier Polynome vom Grad *n*. Bei Verwendung der schnellen Fouriertransformation FFT ist $\mu(n) = n$ log *n*.

(2) Es gilt $C^e = r(C)$.

(3) Sei $z^T = (r_0, \dots , r_{n-1})$, wobei $r(x) = r_0 + r_1 x + \dots + x^n$ gelte und *r(x)* gemäß (1) berechnet werde. Dann gilt mit $y^T = (y_0, \dots, y_{n-1})$, $y(x) = y_0 + y_1 x + \dots + x^n$ sowie *y(x) = xr(x)* mod *c(x)* die Beziehung *Cz = y*.

(4) Mit den Bezeichnungen von (3) und *y(x) = q(x) r(x)* mod *c(x)* , wobei $q(x) \in \mathbf{F_2}[x]$ gelte, erhält man allgemeiner die Beziehung *q(C) z = y*.

(5) Mit der Notation von (4) sei $y(x) = q(x)x^{i-1}$ mod *c (x)*. Dann ist die *i*-te Spalte der Matrix *q(C)* durch *y* gegeben.

(6) Der Aufwand zur Berechnung der Potenz $C^e$ ist O($n^2$+$\mu$(*n*)log e).

Zur Ermittlung der Potenz einer Companion-Matrix berechnet man zunächst die erste Spalte von C gemäß (5). Daraus kann man dann durch sukzessive Multiplikation mit der dünn besetzten Matrix C die weiteren Spalten gewinnen (dies entspricht einer Anwendung von (3)). Der Aufwand pro Multiplikation liegt bei $O(n)$ und es sind $n$-1 Spalten zu berechnen. Diese Vorgehensweise ist deutlich schneller als die Verwendung von Matrixmultiplikationen.

Nach einer weiteren vorteilhaften Ausgestaltung der Erfindung kann eine weitere öffentlich bekannte Matrix E jeweils zwischen die Produkte der Potenzen der Companion-Matrix geschaltet werden, ohne dass sich die geschilderten Verfahrensschritte ändern. In diesem Falle wird mit Ausdrücken der Form $D^a E C^b$ gearbeitet.

Im Gegensatz zu den bisher bekannten Verfahren basiert die Erfindung auf der Theorie nicht kommutativer Gruppen. Der Zusammenhang von irreduziblen Polynomen und Companion-Matrizen über endlichen Körpern wird ausgenutzt, um ein asymmetrisches Verschlüsselungsverfahren sowie ein Verfahren zur Digitalen Signatur zu entwickeln. Gebildet werden jeweils Produkte von Potenzen von Companion-Matrizen, wobei die einzelnen Produktfaktoren nicht kommutieren. Im Bedarfsfall kann eine weitere (öffentlich bekannte) Matrix zwischen diese Faktoren eingefügt werden. Da es sich nicht mehr um einzelne Potenzen handelt, können die bisher bekannten Verfahren zur Berechnung diskreter Logarithmen nicht angewendet werden. Nach dem heute bekannten Stand der Technik kann der ausgetauschte Schlüssel von Dritten nur durch eine vollständige Berechnung aller möglichen Produkte (bis Übereinstimmung erfolgt) bestimmt werden. Verwendet man etwa den Mersenne-Exponenten $n = 61$, so gibt es bereits $(2^{61}-1)^2 \approx 10^{36}$ verschiedene Schlüsselkandidaten. Unterstellt man, dass innerhalb einer Sekunde maximal $10^{20}$ Schlüssel generiert und verglichen werden können, so benötigt man ungefähr $10^8$ Jahre für die Entschlüsselung. Die Schlüssellänge beträgt in diesem Fall 3721 Bits. Dies zeigt, dass bereits kleine Schlüssellängen sehr guten Schutz bieten.

Die Theorie nicht kommutativer Gruppen ist wesentlich aufwendiger und schwieriger als jene Abelscher Gruppen, auf denen die klassischen Verfahren beruhen. Dies bietet weitere Sicherheit gegen Angriffe. Bemerkenswert ist, dass man im Falle der "schnellen" Berechnung der Exponenten a und b von $D^a C^b$ auch ein schnelles Verfahren zur Berechnung diskreter Logarithmen besitzen würde. Die Umkehrung gilt jedoch nicht.

Die Einsatzmöglichkeiten der Erfindung beschränken sich nicht auf den Bereich der Client-Server- beziehungsweise Host-Host-Kommunikation. Vielmehr ist es aufgrund effizienter Implementierungsmöglichkeiten und des geringen erforderlichen Speicher- und Kommunikationsaufwandes auch gut für den Einsatz in den Bereichen Mobilkommunikation und Smartcard-Applikationen geeignet.

Weitere Vorteile und vorteilhafte Ausgestaltungen der Erfindung sind der nachfolgenden Beschreibung, der Zeichnung und den Ansprüchen zu entnehmen.

men.

Zeichnung

In der Zeichnung sind mehrere Ausführungsbeispiele der Erfindung dargestellt und im folgenden näher beschrieben. Es zeigen:

Figur 1 Generierung irreduzibler Polynome als öffentliche Schlüssel,

Figur 2 erstes Ausführungsbeispiel eines Schlüsselaustauschs,

Figur 3 zweites Ausführungsbeispiel eines Schlüsselaustauschs,

Figur 4, 5 drittes Ausführungsbeispiel einer Identifikation, insbesondere einer Nutzeridentifikation.

Beschreibung der Ausführungsbeispiele

In der Zeichnung werden die Details der Erfindung in Form von Blockschaltbildern dargestellt. Dabei wird zunächst ein Schaltbild für die Verfahrensvorbereitung - dies ist die Generierung der öffentlichen Schlüssel - präsentiert. Daran anschließend werden Schaltbilder für die einzelnen Verfahrensvarianten vorgestellt.

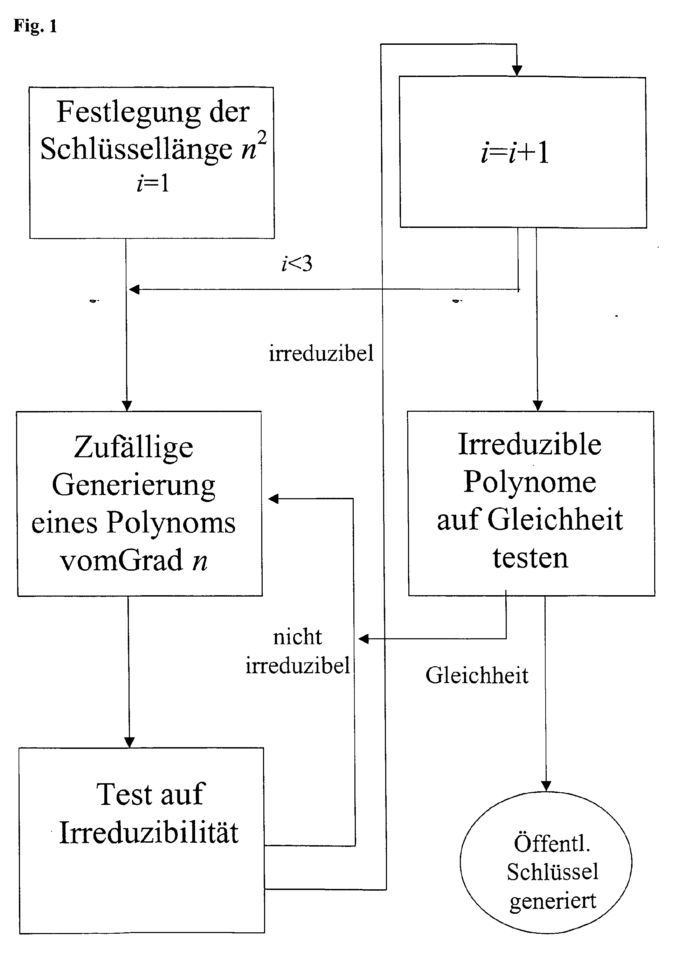

In dem Diagramm von Figur 1 ist die Generierung irreduzibler Polynome als öffentliche Schlüssel dargestellt. Zunächst sind zwei verschiedene irreduzible Polynome als öffentliche Schlüssel zu generieren. Dies erfolgt über einen randomisierten Algorithmus. Nach Generierung von Polynomkandidaten wird auf Irreduzibilität getestet. Gegebenenfalls muß ein neuer Polynomkandidat generiert werden. Das Verfahren endet, sobald zwei verschiedene irreduzible Polynome generiert sind.

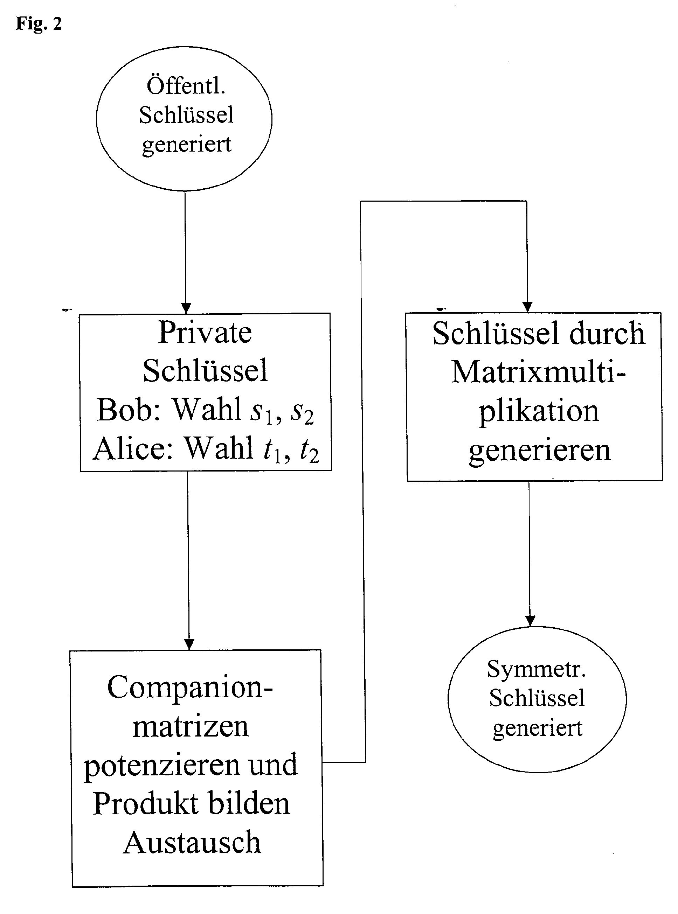

In Figur 2 ist eine erste Verfahrensvariante zur Übermittlung eines symmetrischen Schlüssels über eine unsicheren Kanal dargestellt. Die beiden an der Kommunikation beteiligten Vorrichtungen Alice und Bob generieren jeweils zufällig ihre beiden privaten Schlüssel. Sie bilden parallel die Potenzen der entsprechenden Companion-Matrizen und anschließend deren Produkt. Dann erfolgt der Austausch. Durch Multiplikation der von der jeweils anderen Vorrichtung erhaltenen Matrix von links und rechts mit den jeweiligen aus privaten Schlüsseln generierten Potenzen der Companion-Matrizen kann der symmetrische Schlüssel von beiden Vorrichtungen generiert werden:

(1) Zwei Companion-Matrizen $C$ und $D$ sind gemäß den obigen Voraussetzungen erzeugt worden. Diese Matrizen sind öffentlich bekannt.

(2) Bob generiert zwei natürliche Zahlen $s_1$, $s_2 \in [1, 2^n-1]$, Alice generiert entsprechend zwei natürliche Zahlen $t_1$, $t_2 \in [1, 2^n-1]$. Diese Zahlen bleiben geheim.

(3) Bob bildet die Matrix $D^{s_1} C^{s_2}$ und sendet diese

an Alice. Alice bildet die Matrix $D^{t_1}C^{t_2}$ und sendet diese an Bob.

(4) Bob multipliziert die erhaltene Matrix von links mit $D^{s_1}$ und von rechts mit $C^{s_2}$. Alice verfährt entsprechend mit $t_1$ beziehungsweise $t_2$.

(5) Der so vereinbarte symmetrische Schlüssel ist gegeben durch die Matrix $D^{s_1+t_1}C^{s_2+t_2}$.

Öffentlich verfügbar sind nur die Koeffizienten der irreduziblen Polynome, also die jeweils letzte Spalte der Companion-Matrizen. Dabei ist grundsätzlich unerheblich, ob diese Matrizen bei Bob oder Alice beziehungsweise verteilt bei Bob und Alice gespeichert sind. Bei dieser Variante sind zwei Vektoren der Größe $n$ und zwei Matrizen der Größe $n \times n$ zu übertragen. Sowohl Bob als auch Alice müssen insgesamt drei $n \times n$ Matrizen und beide Vektoren zwischenspeichern (die mit Privatschlüsseln gebildete Potenzen von $C$ und $D$ sowie die übermittelte Matrix).

Die Berechnung der Potenzen der Companion-Matrizen kann effizient implementiert werden, indem die zugehörigen charakteristischen Polynome - diese entsprechen den gewählten irreduziblen Polynomen - zur Bestimmung herangezogen werden. Der Aufwand ist $O(n^2+\mu(n)\log e)$, wobei $e$ den gewünschten Exponenten bezeichnet. $\mu(n)$ ist der Aufwand, welcher zur Multiplikation zweier Polynome vom Grade $n$ benötigt wird. Verwendet man für die Polynommultiplikation die schnelle Fouriertransformation (FFT), so gilt $\mu(n) = n \log n$ (vgl. Fiduccia, C. M.: An Efficient Formula for Linear Recurrences. SIAM J. Computation, Vol. 14, Nr. 1 (1985), S. 106-112). Zur Berechnung der Produkte benötigen Alice und Bob dann noch jeweils drei weitere Matrixmultiplikationen. Auch hier existieren effiziente Techniken (vgl. Winograd, S.: Arithmetic Complexity of Computations. SIAM Regional Conference Series in Applied Mathematics Vol. 33, Philadelphia (1980)).

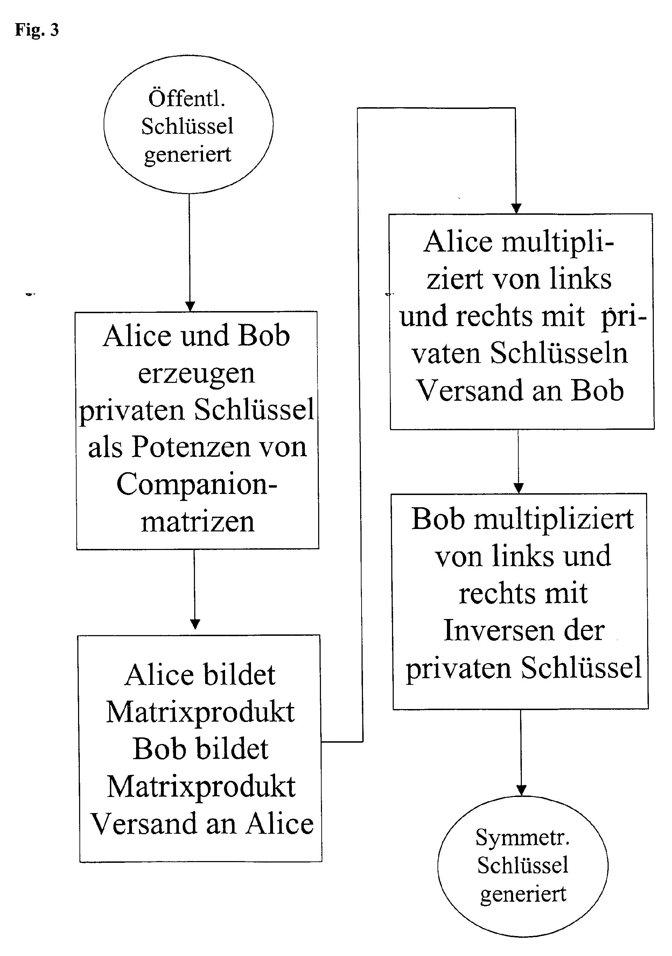

In Figur 3 ist ein weiteres Ausführungsbeispiel eines Schlüsselaustauschs dargestellt. Die beiden Vorrichtungen Alice und Bob generieren jeweils zufällig ihre beiden privaten Schlüssel. Sie bilden parallel die Potenzen der entsprechenden Companion-Matrizen. Beide berechnen anschließend deren Produkt. Alice ist damit bereits im Besitz des zu vereinbarenden symmetrischen Schlüssels. Bob übermittelt sein Matrixprodukt an Alice. Alice multipliziert die erhaltene Matrix von links und rechts mit ihren privaten Schlüsseln und übermittelt das Produkt an Bob. Bob multipliziert von links und von rechts mit den jeweiligen Inversen der Companion-Matrizen. Die Invertierung erfordert den gleichen Aufwand wie die Potenzierung. Damit ist auch Bob im Besitz des zu vereinbarenden symmetrischen Schlüssels:

(1) Zwei Companion-Matrizen C und D sind gemäß den obigen Voraussetzungen erzeugt worden. Diese Matrizen sind öffentlich bekannt.

(2) Bob generiert zwei natürliche Zahlen $s_1$, $s_2 \in [1,2^n\text{-}1]$. Diese Zahlen bleiben geheim. Er bildet die Matrizen $D^{s_1}$, $C^{s_2}$ und $D^{s_1}C^{s_2}$. Die ersten beiden Matrizen bleiben geheim, das Produkt wird an Alice gesandt und ist folglich öffentlich.

(3) Alice bildet die Matrizen $D^{t_1}$ und $C^{t_2}$ mit geheimen Zahlen $t_1$, $t_2 \in [1,2^n\text{-}1]$. Sie berechnet die Produkte $D^{t_1}C^{t_2}$ und $D^{t_1}D^{s_1}C^{s_2}C^{t_2} = D^{s_1+t_1}C^{s_2+t_2}$. Diese Matrix wird an Bob gesendet.

(4) Bob multipliziert die erhaltene Matrix von links mit $D^{-s_1}$ und von rechts mit $C^{-s_2}$.

(5) Der so vereinbarte symmetrische Schlüssel ist gegeben durch die Matrix $D^{t_1}C^{t_2}$

Diese Verfahrensvariante erfordert bei beiden Vorrichtungen den gleichen Kommunikations- und Speicheraufwand wie die erste Variante. Bob bildet einmalig das Matrixprodukt. Ebenso kann er einmalig die Matrizen $D^{s_1}$ und $C^{s_2}$ invertieren und diese Inversen statt der Originalmatrizen speichern. Die Berechnung der Inversen kann mit dem gleichen Verfahren wie die Berechnung der Potenzen der Companion-Matrizen erfolgen, so dass auf den Einsatz eines numerischen Verfahrens zur Matrixinvertierung verzichtet werden kann. Es gilt nämlich $C^{-a} = C^{2n-1-a}$. Bei jeder neuen Schlüsselvereinbarung sind dann zwei Matrixmultiplikationen für Bob erforderlich. Alice benötigt jeweils drei Multiplikationen. Sieht man von den einmaligen Berechnungen bei Bob ab, erspart die zweite Variante bei einem Kommunikationspartner eine Matrixmultiplikation, in diesem Fall bei Bob. Auch hier ist es grundsätzlich unerheblich, ob beide öffentlichen Schlüssel bei Bob beziehungsweise Alice beziehungsweise verteilt gespeichert sind.

Zum vorteilhaften Einsatz der Erfindung auf Chipkarten kann folgende Modifikation der Vorgehensweise des zweiten Beispiels vorgenommen werden.

(1) Zwei Companion-Matrizen C und D sind gemäß den obigen Voraussetzungen auf der Vorrichtung Bob erzeugt worden. Diese Matrizen sind öffentlich bekannt. Der Vorrichtung Bob ist eine Chipkarte zugeordnet.

(2) Bob generiert zwei natürliche Zahl $s_1$, $s_2 \in [1,2^n\text{-}1]$. Diese Zahlen bleiben geheim. Bob bildet die Matrizen $D^{s_1}$, $C^{s_2}$ sowie deren Inverse und die Matrix $D^{s_1}C^{s_2}$. Die ersten beiden Matrizen und ihre Inversen bleiben geheim, das Produkt ist öffentlich. Dieser Schritt erfolgt einmalig und kann bei weiteren Schlüsselvereinbarungen auch mit anderen Vorrichtungen entfallen.

(3) Die Vorrichtung Alice bildet die Matrizen $D^{t_1}$ und $C^{t_2}$ mit geheimen Zahlen $t_1$, $t_2 \in [1,2^n\text{-}1]$. Sie berechnet die Produkte $D^{t_1}C^{t_2}$ und $M = D^{t_1}D^{s_1}C^{s_2}C^{t_2} = D^{s_1+t_1} C^{s_2+t_2}$. Diese Matrix wird an Bob gesendet. Darüber hinaus übermittelt Alice an Bob eine oder mehrere verschiedene Zahlen $j$ mit $1 \le j \le n$. Die Konkatenation der ausgewählten $j$-ten Zeilen der Matrix $D^{t_1}C^{t_2}$ bildet den vereinbarten Schlüssel.

(4) Sei $e_j$ der $j$-te Einheitsvektor (Spaltenvektor), $f_j$ der korrespondierende transponierte Vektor (Zeilenvektor). Bob bildet $x_j = f_j D^{-s_1} M C^{-s_2}$.

(5) Bob bildet den symmetrischen Schlüssel durch Konkatenation der berechneten $x_j$.

Diese Variante hat den Vorteil, dass auf der Chipkarte Matrixmultiplikationen eingespart werden. Notwendig sind dort nur Multiplikationen einer Matrix mit einem Vektor. Die Anzahl ergibt sich aus der gewünschten Schlüsselgröße, also der Zahl übermittelter Parameter $j$. Die Berechnung der Parameter gemäß (1) und (2) erfolgt nur einmalig. Dies kann beispielsweise auf einem Trusted Server mit anschließender Übertragung auf die Chipkarte geschehen.

Nachfolgend wird der Einsatz der Erfindung zur Darstellung digitaler Signaturen präsentiert. Dazu benötigt man ein Matrixprodukt der Form $D^a C^b$ als weiteren öffentlichen Schlüssel, wobei $a$ und $b$ geheim bleiben.

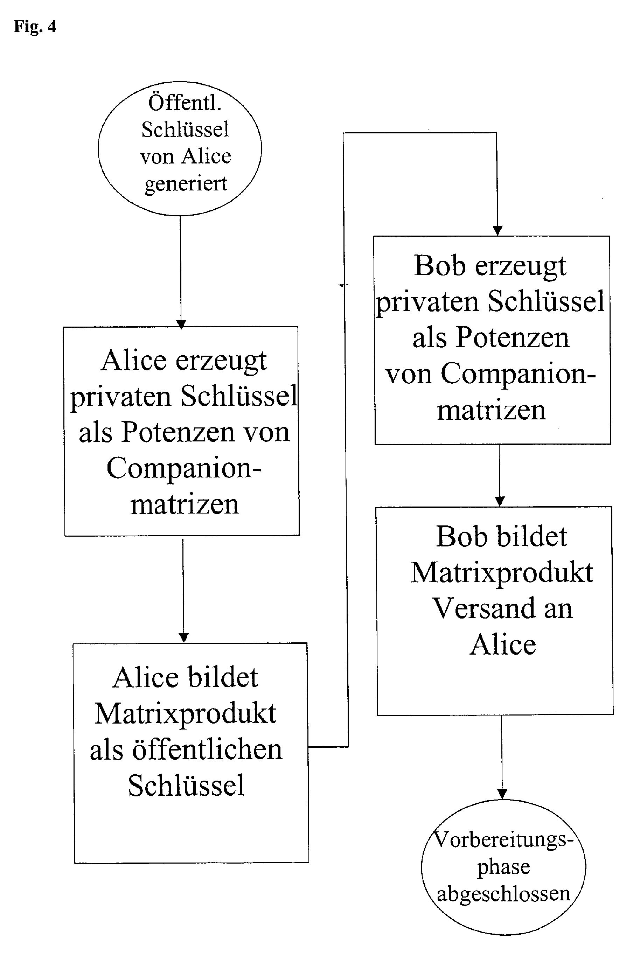

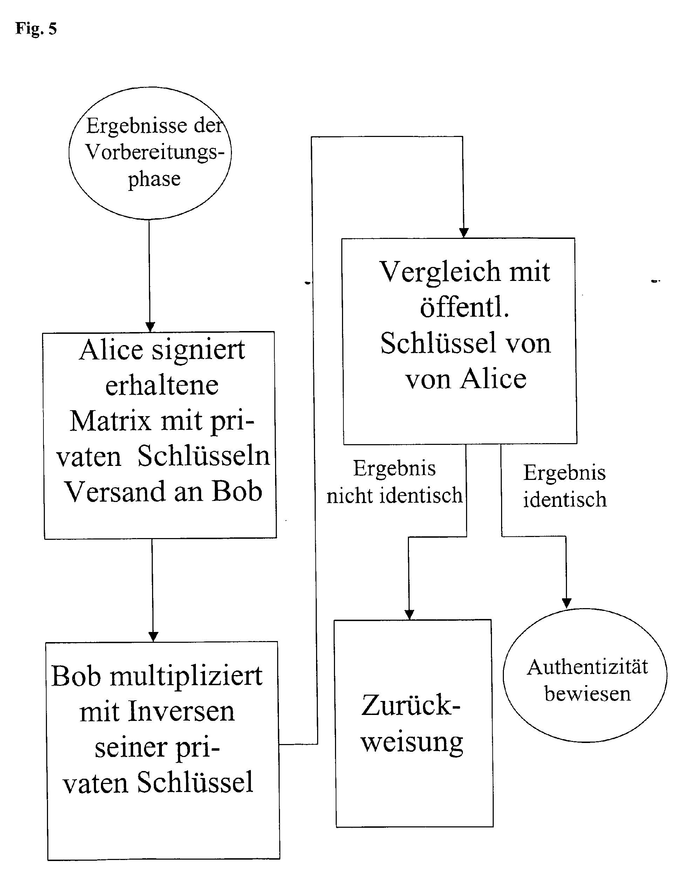

In den Diagrammen der Figuren 4 und 5 ist ein Ausführungsbeispiel einer Identifikation, auch genannt Benutzerauthentikation, dargestellt. Zunächst generiert die Vorrichtung Alice einen weiteren zusätzlichen öffentlichen Schlüssel als Produkt der Potenzen zweier Companion-Matrizen. Die Faktoren dieses Produktes bleiben geheim. Bob generiert zufällige Potenzen der Companion-Matrizen, die aus dem öffentlichen Schlüssel von Alice gebildet werden. Die beiden Potenzen werden multipliziert und an Alice übermittelt. In Figur 5 signiert Alice nun die so erhaltene Matrix, indem sie von links und rechts mit ihren generierten geheimen Potenzen der Companion-Matrizen multipliziert. Das Ergebnis wird an Bob übermittelt.

Dieser multipliziert das erhaltene Produkt von links und rechts mit den invertierten Potenzen seiner generierten Companion-Matrizen und sollte so den öffentlichen Schlüssel von Alice erhalten. Ist dies nicht der Fall, ist die Transaktion zurückzuweisen:

(1) Alice besitze die Companion-Matrizen $C$ und $D$ sowie das Produkt $D^a C^b$ als öffentliche Schlüssel.
(2) Alice möchte ihre Identität gegenüber Bob beweisen. Dazu sendet Bob die Matrix $D^{\varphi_1} C^{\varphi_2}$ mit zufällig gewählten privaten Schlüsseln $\varphi_1$, $\varphi_2 \in [1, 2^n-1]$.
(3) Alice signiert mit ihrem privaten Schlüsselpaar und sendet die Matrix $D^{a+\varphi_1} C^{b+\varphi_2}$ an Bob.
(4) Bob kann durch Multiplikation mit $D^{-\varphi_1}$ von links sowie $C^{-\varphi_2}$ von rechts den öffentlichen Schlüssel von Alice $D^a C^b$ generieren und durch Vergleich die Gültigkeit der Signatur verifizieren.

Mit dieser Variante kann eine Vorrichtung oder der Nutzer dieser Vorrichtung folglich seine eigene Identität gegenüber einer zweiten Vorrichtung oder deren Nutzer bestätigen. Voraussetzung ist wie bei allen Public-Key-Signaturen die Authentizität der öffentlichen Schlüssel. Um diese zu garantieren benötigt man Trusted Server bzw. Trusted Third Parties. Verwendet werden in diesem Zusammenhang häufig Zertifikate, die gegebenenfalls von vertrauenswürdigen Stellen (Trust Center) ausgestellt werden oder Authentikationsbäume (vgl. Menezes, A., van Oorschot, P., Vanstone, S.: Handbook of Applied Cryptography. CRC Press, Boca Raton (1996)). Diese Verfahren können natürlich im Rahmen der Erfindung eingesetzt werden.

Zur Authentikation einer Chipkarte gegenüber einem Server kann das geschilderte Verfahren wiederum leicht modifiziert werden. Erneut werden Matrixmultiplikationen auf der Chipkarte eingespart und durch Multiplikationen eines Vektors mit einer Matrix ersetzt.

(1) Die Vorrichtung Alice und die ihr zugeordnete Chipkarte besitze die Companion-Matrizen $C$ und $D$ sowie das Produkt $D^a C^b$ als öffentliche Schlüssel.
(2) Alice möchte ihre Identität gegenüber Bob beweisen. Dazu sendet Bob die Matrix $M = D^{\varphi_1}(D^a C^b) C^{\varphi_2}$ mit zufällig gewählten privaten Schlüsseln $\varphi_1$, $\varphi_2 \in [1, 2^n-1]$ und eine Anzahl von Paramtern $j$ mit $1 \leq j \leq n$ an Alice.
(3) Sei $e_j$ der $j$-te Einheitsvektor (Spaltenvektor), $f_j$ der korrespondierende transponierte Vektor (Zeilenvektor). Alice bildet $x_j = f_j D^{-a} M C^{-b}$ und übermittelt diesen Zeilenvektor für jedes von Bob gewünschte $j$.
(4) Bob verifiziert durch Vergleich von $x_j$ mit der $j$-ten Zeile der Matrix $D^{\varphi_1} C^{\varphi_2}$. Stimmen diese Zeilen für alle geforderten $j$ überein, gilt Alice als identifiziert. Ansonsten erfolgt eine Zurückweisung.

Nachfolgend wird der Einsatz der Erfindung zur digitalen Signatur beschrieben. Dabei handelt es sich um ein One-Time-Signature-Scheme (vgl. Menezes, A., van Oorschot, P., Vanstone, S.: Handbook of Applied Cryptography. CRC Press, Boca Raton (1998), S. 462 ff.).

1. Zwei Companion-Matrizen $C$ und $D$ sind gemäß den obigen Voraussetzungen von Alice erzeugt worden. Diese Matrizen sind öffentlich bekannt.
2. Alice besitzt geheime Schlüssel $D^a$ und $C^b$ sowie den zusätzlichen öffentlichen Schlüssel $D^a C^b$.
3. Zur Signatur eines Dokumentes mit Hashwert $h$ der Länge $2(n\text{-lb}(n)\text{-}1)$ in Binärdarstellung wird $h$ zunächst in zwei gleiche Hälften $h_1$ und $h_2$ geteilt. Dabei bezeichnet lb() den Logarithmus zur Basis 2. Dann berechnet Alice zunächst die Binärdarstellung der Zahlen $c_1$ bzw. $c_2$ der Anzahl Nullen in $h_1$ bzw. $h_2$. Anschließend bildet Alice durch Konkatenation die Hashwerte $h_1^* = (h_1, c_1)$ und $h_2^* = (h_2, c_2)$. $h_1^*$ und $h_2^*$ haben jeweils maximal die Länge $n$.
4. Steht an der $i$-ten Stelle von $h_1^*$ eine 1, so übermittelt Alice die $i$-te Zeile von $D^a$ an Bob. Steht an der $j$-ten Stelle von $h_2^*$ eine 1, so übermittelt Alice die $j$-te Spalte von $C^b$ an Bob.
5. Bob bildet zur Verifikation der Signatur die Skalarprodukte der ihm übergebenen Zeilen mit den jeweiligen Spalten. Ist etwa $x$ die Zeile $i_1$ von $D^a$ und $y$ die Spalte $j_1$ von $C^b$, so wird das Skalarprodukt $x^T y$ gebildet. Dies muß mit der Komponente $(i_1, j_1)$ der Matrix $D^a C^b$ übereinstimmen. Geht man von einer ungefähren Gleichverteilung von Nullen und Einsen in der Binärdarsllung des Hashwertes aus so werden ungefähr $n/2$ Zeilen und Spalten übermittelt, so dass $n^2/4$ Werte der Matrix $D^a C^b$ verifiziert werden.

Da explizit Elemente des privaten Schlüssels von Alice an Bob übermittelt werden, kann dieses Verfahren mit den privaten Schlüsseln $D^a$ und $C^b$ nur einmalig mit diesen Parametern verwendet werden. Bei einer erneuten Signatur, sind a und b neu zu wählen.

Diese beiden Parameter sind bei einer Trusted Third Party zu hinterlegen. Damit soll garantiert werden, dass die Signatur tatsächlich von Alice stammt. Ebenso erhält Bob die Sicherheit, dass der ihm übermittelte öffentliche Schlüssel $D^a C^b$ tatsächlich zu Alice gehört.

In der Literatur werden weitere Protokolle diskutiert, in deren Rahmen Public-Key-Verfahren zum Schlüsseltausch beziehungsweise zur Signatur eingesetzt werden. Die verwendeten Verfahren sind in erster Linie RSA, das Diffie-Hellman-Verfahren und das darauf basierende EI-Gamal-Verfahren (vgl. Menezes, A., van Oorschot, P., Vanstone, S.: Handbook of Applied Cryptography. CRC Press, Boca Raton (1996), Kapitel 12). Zu nennen sind

    (1) MTI two-pass Key Agreement,
    (2) STS (Station-to-Station-Protocol),
    (3) Günther's implizites Zertifizierungsprotokoll,
    (4) Girault-Verfahren.

Die Erfindung kann überall in den Protokollen anstelle der dort verwendeten Verfahren eingesetzt werden.

Natürlich können die beschriebenen Verfahrensvarianten "symmetrisch" angewendet werden. Dann besitzen sowohl Bob als auch Alice jeweils zwei irreduzible Polynome als öffentliche Schlüssel. Bei Authentikation und Digitaler Signatur kommt jeweils ein Matrix $M_A$ bzw. $M_B$ als öffentlicher Schlüssel hinzu. Vereinbart werden dann zwei symmetrische Schlüssel, aus denen mittels eines vorher festzulegenden Verfahrens der zu vereinbarende symmetrische Kommunikationsschlüssel gebildet wird.

Bei allen Public-Key-Verfahren besteht das Problem, sicherzustellen, dass der öffentliche Schlüssel tatsächlich zur damit assoziierten Person gehört. Dazu werden heute häufig Zertifikate oder Authentikationsbäume eingesetzt (vgl. Menezes, A., van Oorschot, P., Vanstone, S.: Handbook of Applied Cryptography. CRC Press, Boca Raton (1996)). Dazu benötigt man vertrauensvolle dritte Personen (Trust Center, Trusted Third Parties, Trusted Server), die die Echtheit öffentlicher Schlüssel garantieren. Die Erfindung kann im Rahmen des Zertifizierungsprozesses eingesetzt werden (Digitale Signatur). Die Authentikation gegenüber einem Trusted Server kann mittels des in Beispiel 3 geschilderten Authentikationsprozesses erfolgen.

Die Erfindung kann problemlos im Rahmen der viel diskutierten Zero Knowledge Protokolle zur Authentikation eingesetzt werden. Darüber hinaus eignet sie sich auch als Blindingverfahren bei der Anonymisierung elektronischer Münzen.

Sämtliche Merkmale der Erfindung können sowohl einzeln als auch in beliebiger Kombination miteinander erfindungswesentlich sein.

**Patentansprüche**

1. Verfahren zur Bestimmung eines symmetrischen Schlüssels über einen unsicheren Kanal und zur digitalen Signatur bei der Übermittlung einer Nachricht zwischen einer ersten und einer zweiten Vorrichtung, **dadurch gekennzeichnet,**
   **dass** durch eine der beiden Vorrichtungen mindestens zwei verschiedene irreduzible Polynome mit einen randomisierten oder deterministischen Algorithmus gebildet werden und an die andere Vorrichtung übermittelt werden,
   **dass** zu diesen beiden Polynomen die Companionmatrizen gebildet werden,
   **dass** durch jede der beiden Vorrichtungen als private Schlüssel mindestens zwei natürliche Zahlen durch einen randomisierten oder deterministischen Algorithmus generiert werden,
   **dass** jede der beiden Vorrichtungen die Companionmatrizen mit den privaten Schlüsseln potenziert und das Produkt der Potenzen bildet,
   **dass** beide oder nur eine der beiden Vorrichtungen ihr Produkt der Potenzen der Companionmatrizen an die andere Vorrichtung übermitteln,
   **dass** eine oder beide Vorrichtungen das empfangene Produkt der Potenzen von links und rechts mit den eigenen mit positivem oder negativem Exponenten potenzierten Companionmatrizen multiplizieren um den symmetrischen Schlüssel oder die digitale Signatur zu erhalten.

2. Verfahren nach Anspruch 1, **dadurch gekennzeichnet, dass** jede der beiden Vorrichtungen ihr Produkt der Potenzen der Companionmatrizen an die andere Vorrichtung übermittelt, und dass als symmetrischer Schlüssel durch beide Vorrichtungen das Produkt der potenzierten Companionmatrizen mit der von der anderen Vorrichtung erhaltenen Matrix gebildet wird.

3. Verfahren nach Anspruch 1, **dadurch gekennzeichnet, dass** das Produkt der Potenzen der Companionmatrizen durch die erste Vorrichtung an die zweite Vorrichtung übermittelt wird,

dass durch die zweite Vorrichtung das Produkt aus der erhaltenen Matrix und dem eigenen Produkt der Potenzen der Companionmatrizen gebildet wird und an die erste Vorrichtung übermittelt wird, dass durch die erste Vorrichtung als symmetrischer Schlüssel das Produkt aus der erhaltenen Matrix einerseits und den mit den negativen Exponenten der ersten Vorrichtung potenzierten Companionmatrizen andererseits gebildet wird.

4. Verfahren nach Anspruch 1, **dadurch gekennzeichnet, dass** beide Vorrichtungen ihr Produkt der Potenzen der Companionmatrizen an die andere Vorrichtung übermitteln, dass durch die erste Vorrichtung das Produkt aus der erhaltenen Matrix und den eigenen Matrixpotenzen gebildet wird und an die zweite Vorrichtung übermittelt wird, dass durch die zweite Vorrichtung das Produkt aus der erhaltenen Matrix einerseits und den mit den negativen Exponenten der zweiten Vorrichtung potenzierten Companionmatrizen andererseits gebildet wird und mit dem vorher erhaltenen Produkt der ersten Vorrichtung verglichen wird.

5. Verfahren nach Anspruch 1, **dadurch gekennzeichnet, dass** die zweite Vorrichtung ihr Produkt der Potenzen der Companionmatrizen an die erste Vorrichtung übermittelt, dass durch die erste Vorrichtung das Produkt aus der erhaltenen Matrix und den eigenen Matrixpotenzen gebildet wird und an die zweite Vorrichtung übermittelt wird, dass die erste der beiden Vorrichtungen eine oder mehrere Zahlen $j$ generiert, für die gilt $1 \leq j \leq n$, dass die erste Vorrichtung die Zahlen $j$ an die zweite Vorrichtung übermittelt, dass als geheimer Schlüssel die Konkatenation der $j$-ten Zeilen des Produktes der Potenzen der Companionmatrizen der ersten Vorrichtung gebildet wird, dass die zweite Vorrichtung den geheimen Schlüssel durch Konkatenation von $x_j$ bildet, wobei $x_j = f_j D^{-s_1} M C^{-s_2}$, mit $f_j$ korrespondierender transponierter Zeilenvektor zu $e_j$, wobei $e_j$ der $j$-te Spalteneinheitsvektor ist, $D^{s_1} C^{s_2}$ das Produkt der Potenzen der zweiten Vorrichtung der Companionmatrizen $C$ und $D$ ist und $M = D^{t_1} D^{s_1} C^{s_2} C^{t_1} = D^{s_1+t_1} C^{s_2+t_2}$ mit $D^{t_1} C^{t_2}$ als Produkt der Potenzen der Companionmatrizen der ersten Vorrichtung ist.

6. Verfahren nach Anspruch 1, **dadurch gekennzeichnet, dass** die zweite Vorrichtung ihr Produkt der Potenzen der Companionmatrizen an die erste Vorrichtung übermittelt, dass durch die erste Vorrichtung das Produkt aus der erhaltenen Matrix und den eigenen Matrixpotenzen gebildet wird und an die zweite Vorrichtung übermittelt wird, dass die erste der beiden Vorrichtungen eine oder mehrere Zahlen $j$ generiert, für die gilt $1 \leq j \leq n$, dass die erste Vorrichtung die Zahlen $j$ an die zweite Vorrichtung übermittelt, dass die zweite Vorrichtung für jedes $j$ $x_j$ bildet, wobei $x_j = f_j D^{-s_1} M C^{-s_2}$, mit $f_j$ korrespondierender transponierter Zeilenvektor zu $e_j$, wobei $e_j$ der $j$-te Spalteneinheitsvektor ist, $D^{s_1} C^{s_2}$ das Produkt der Potenzen der zweiten Vorrichtung der Companionmatrizen $C$ und $D$ ist und $M = D^{t_1} D^{s_1} C^{s_2} C^{t_1} = D^{s_1+t_1} C^{s_2+t_2}$ mit $D^{t_1} C^{t_2}$ als Produkt der Potenzen der Companionmatrizen der ersten Vorrichtung ist, das die zweite Vorrichtung $x_j$ an die erste Vorrichtung übermittelt und diese den erhaltenen Zeilenvektor mit der $j$-ten Zeile ihres Produktes von Potenzen der Companionmatrizen vergleicht.

7. Verfahren nach Anspruch 1, **dadurch gekennzeichnet, dass** durch die zweite Vorrichtung als private Schlüssel mindestens zwei natürliche Zahlen a und b generiert werden, dass die zweite Vorrichtung die Companionmatrizen C, D mit den privaten Schlüsseln potenziert und das Produkt der Potenzen bildet, dass die zweite Vorrichtung den Hashwert $h$ einer Nachricht bildet und in zwei Teile $h_1$ und $h_2$ gleicher Länge aufteilt, dass die zweite Vorrichtung ihr Produkt der Potenzen von Companionmatrizen $D^a C^b$ an die erste Vorrichtung übermittelt, dass die zweite Vorrichtung die Binärdarstellung $c_1$ und $c_2$ der Anzahl der Nullen von $h_1$ und $h_2$ bildet und anschließend diese mit $h_1$ und $h_2$ zu $h_1^*$ und $h_2^*$ konkateniert, dass die zweite Vorrichtung die $i$-te Zeile $y_i$ des geheimen Schlüssels $D^a$ an die erste Vorrichtung übermittelt, falls an der $i$-ten Stelle von $h_1^*$ eine Eins steht, dass die zweite Vorrichtung die $j$-te Spalte $x_j$ des geheimen Schlüssels $C^b$ an die erste Vorrichtung übermittelt, falls an der $j$-ten Stelle von $h_2^*$ eine Eins steht, dass die erste Vorrichtung das Skalarprodukt $y_i x_j$ für jede Kombination $i$ und $j$ bildet und mit der $(i,j)$-ten Komponente des übermittelten Produktes von Potenzen von Companionmatrizen vergleicht.

8. Verfahren nach einem der vorhergehenden Ansprüche, **dadurch gekennzeichnet, dass** die Companionmatrizen n x n-Matrizen sind, wobei n eine Primzahl und ein Mersenne-Exponent einer Mersenne-Zahl ist.

9. Verfahren nach einem der vorhergehenden Ansprüche, **dadurch gekennzeichnet, dass** eine weitere öffentlich bekannte Matrix jeweils zwischen die Produkte der Potenzen der Companionmatrizen ge-

schaltet wird.

**Fig. 1**

Festlegung der
Schlüssellänge $n^2$
$i=1$

$i=i+1$

$i<3$

irreduzibel

Zufällige
Generierung
eines Polynoms
vomGrad $n$

Irreduzible
Polynome
auf Gleichheit
testen

nicht
irreduzibel

Gleichheit

Test auf
Irreduzibilität

Öffentl.
Schlüssel
generiert

**Fig. 2**

Öffentl.
Schlüssel
generiert

Private
Schlüssel
Bob: Wahl $s_1$, $s_2$
Alice: Wahl $t_1$, $t_2$

Schlüssel durch
Matrixmultiplikation
generieren

Companion-
matrizen
potenzieren und
Produkt bilden
Austausch

Symmetr.
Schlüssel
generiert

**Fig. 3**

**Fig. 4**

Öffentl. Schlüssel von Alice generiert

Alice erzeugt privaten Schlüssel als Potenzen von Companion-matrizen

Bob erzeugt privaten Schlüssel als Potenzen von Companion-matrizen

Alice bildet Matrixprodukt als öffentlichen Schlüssel

Bob bildet Matrixprodukt Versand an Alice

Vorbereitungs-phase abgeschlossen

**Fig. 5**

Ergebnisse der Vorbereitungs- phase

Alice signiert erhaltene Matrix mit pri- vaten Schlüsseln Versand an Bob

Vergleich mit öffentl. Schlüssel von von Alice

Ergebnis nicht identisch

Ergebnis identisch

Bob multipliziert mit Inversen seiner pri- vaten Schlüssel

Zurück- weisung

Authentizität bewiesen